# EUROPÄISCHE PATENTANMELDUNG

(11) **EP 3 896 812 A1**
(43) Veröffentlichungstag der Anmeldung: **20.10.2021**
(21) Anmeldenummer: 20170059.8
(22) Anmeldetag: 17.04.2020
(51) Int. Cl.: H02J 1/08, B60L 50/51, H02P 25/22

(54) **ANTRIEBSSYSTEM FÜR ELEKTRISCHE MULTILANE MOTOREN MIT ENERGIEAUSTAUSCH ZWISCHEN DEN LANES**

(71) Anmelder: Siemens Aktiengesellschaft, 80333 München (DE)
(72) Erfinder: Birkmayer, Wolfram Siegfried, 91341 Röttenbach (DE); Weidauer, Jens, 90763 Fürth (DE)

(57) **Zusammenfassung**

Die Erfindung gibt ein elektrisches Antriebssystem an, das aufweist:
- mehrere mehrphasige Multi-Lane Elektromotore (1), wobei gleiche Lanes unterschiedlicher Elektromotore (1) gemeinsam eine Lane-Gruppe (LG1, LG2, LG3) bilden,
- mindestens einen elektrischen Energiespeicher (3.1, 3.2, 3.3) für jede Lane-Gruppe (LG1, LG2, LG3),
- ein elektrisches AC/DC-Stellgerät (4.1, 4.2, 4.3) für jede Lane-Gruppe (LG1, LG2, LG3),
- einen DC-Bus (10.1, 10.2, 10.3) für jede Lane-Gruppe (LG1, LG2, LG3), wobei über den DC-Bus (10.1, 10.2, 10.3) ein DC/AC-Stellgerät (2.1, 2.2, 2.3) für jede Lane der Elektromotore (1) mit Gleichstrom durch die AC/DC-Stellgeräte (4.1, 4.2, 4.3) versorgbar ist,
- einen elektromagnetischen Wandler (5, 7), der ausgebildet ist, die Wechselspannungen der AC/DC-Stellgeräte (4.1, 4.2, 4.3) elektromagnetisch zu verketten,
- eine Steuer- und Regeleinheit (11), die eingerichtet ist, bei Wegfall einer Lane-Gruppe (LG1, LG2 oder LG3) die elektrische Energie des elektrischen Energiespeichers (3.1, 3.2 oder 3.3) der weggefallenen Lane-Gruppe (LG1, LG2 oder Lg3) durch eine Regelegung der Spannung der AC/DC Stellgeräte (4.1, 4.2, 4.3) für mindestens eine nicht weggefallene Lane-Gruppe (LG1, LG2 oder LG3) zur Verfügung zu stellen.

Ein Fahrzeug mit einem derartigen Antriebssystem und ein Betriebsverfahren für das elektrische Antriebssystem werden ebenfalls angegeben.

## Beschreibung

### GEBIET DER ERFINDUNG

Die Erfindung betriff ein elektrisches Antriebssystem mit mehreren mehrphasigen Multi-Lane Elektromotoren, wobei gleiche Lanes unterschiedlicher Elektromotore gemeinsam eine Lane-Gruppe bilden. Die Erfindung betrifft auch ein zugehöriges Verfahren zum Betrieb eines elektrischen Antriebssystems sowie ein Fahrzeug mit einem elektrischen Antriebssystem.

### HINTERGRUND DER ERFINDUNG

Die Elektromobilität wird zukünftig eine immer größere Rolle spielen. Am Beispiel der Luftfahrt wird ein dabei erforderliches Sicherheitskonzept erläutert. Es kann auf andere technische Bereiche angewandt werden. Flugzeuge sollen künftig elektrisch betrieben werden. Der Auftrieb und der Vorschub werden dabei mit Hilfe von Propellern oder Triebwerken generiert, die von Elektromotoren angetrieben werden. Die Energieversorgung für die Elektromotore erfolgt wahlweise über Batterien oder Generatoren. Elektromotore, Batterien, Generatoren sowie zusätzlich benötigte Schalt- und Steuereinrichtungen bilden das elektrische Antriebssystem.

Das elektrische Antriebssystem muss eine hohe Verfügbarkeit aufweisen. Das heißt, dass ein einzelner Fehler nicht zu einem Ausfall des gesamten Antriebssystems führen darf. Die fehlerhafte Komponente muss vom System erkannt und getrennt werden, so dass alle funktionsfähigen Komponenten in Betrieb bleiben und ausreichend Antriebsleistung zur Verfügung stellen können.

Dieses Ziel wird in den Antriebsmotoren mit einem so genannten Lane-Konzept erreicht. Dabei wird jeder Elektromotor aus mehreren elektrisch und magnetisch entkoppelten Teilmotoren aufgebaut. Jeder Teilmotor wird von einem eigenen Stellgerät (z.B. einem Wechselrichter) mit elektrischer Energie versorgt. Der Wechselrichter betreibt seinen Teilmotor z.B. mit einer Drehzahlregelung. Die Drehzahlregelung enthält eine sogenannte "Statikfunktion", die den parallelen Betrieb der Teilmotore an einer gemeinsamen mechanischen Welle ermöglicht. Teilmotor und Wechselrichter bilden eine Lane, die im Fehlerfall ohne Rückwirkungen auf die anderen Lanes abgeschaltet werden kann.

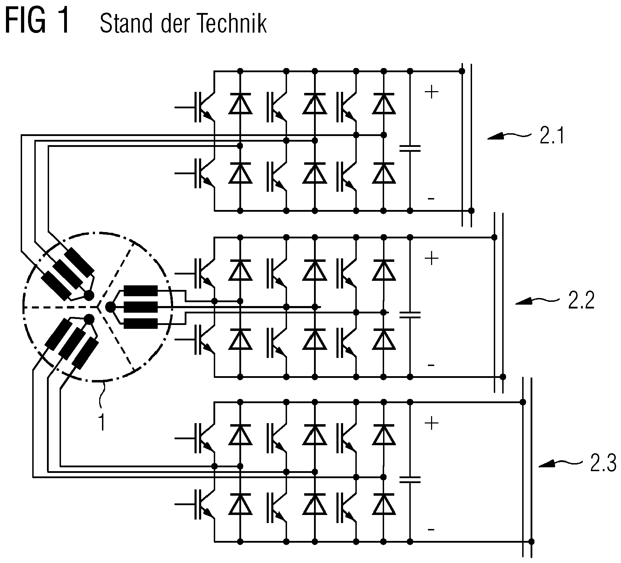

FIG. 1 zeigt ein Blockschaltbild einer Anordnung zum Energieaustausch bei einem elektrischen Multilane Antrieb. Der dreiphasige Elektromotor 1 weist drei Lanes auf, die jeweils von einem DC/AC Stellgerät mit elektrischer Energie versorgt werden, im Einzelnen sind das: Das erste Stellgerät 2.1 der ersten Lane, das zweite Stellgerät 2.2 der zweiten Lane und das dritte Stellgerät 2.3 der dritten Lane. Die Stellgeräte 2.1, 2.2 und 2.3 sind beispielsweise Wechselrichter und wandeln Gleichstrom in Wechselstrom um. Sie

Das Lane-Konzept kann auf das gesamte elektrische Antriebssystem übertragen werden. Dazu werden die einzelnen Komponenten (Antrieb, Batterie und Generator) ebenfalls mit Lanes ausgeführt. Prinzipiell wäre es möglich, jeweils nur eine Motor-Lane mit einer Batterie-Lane und einer Generator-Lane zu verschalten. In diesem Fall wird eine maximal mögliche Separation der Lanes erreicht und damit die maximale Verfügbarkeit des Gesamtsystems erreicht.

Um den Verdrahtungsaufwand gering zu halten, wird man bei einem praktischen Einsatz mehrere Lanes zu sogenannten "Lane-Gruppen" kombinieren. Jede Lane-Gruppe besitzt einen eigenen DC-Bus. Im praktischen Betrieb kommt es vor, dass die Lane-Gruppen, z.B. aufgrund von Fehlern, unterschiedlich belastet werden. Im Extremfall würden bei Ausfall aller Antriebs-Lanes einer Lane-Gruppe die dort angeschlossenen Batterien nicht mehr genutzt werden und die in ihnen gespeicherte elektrische Energie wäre nicht mehr nutzbar.

### ZUSAMMENFASSUNG DER ERFINDUNG

Es ist Aufgabe der Erfindung, für elektrische Antriebe eine Lösung anzugeben, um bei elektrischen Antrieben mit mehreren Lanes bei einem Ausfall von Komponenten trotzdem möglichst viel gespeicherte Energie zur Verfügung zu haben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Es wäre von Vorteil, die elektrische Energie einer Lane-Gruppe in eine andere Lane-Gruppe zu übertragen, ohne die Lane-Gruppen galvanisch zu verbinden.

In einem ersten Aspekt der Erfindung erfolgt daher in einem Fehlerfall der Energietransfer über den elektrischen Generator. Die Wicklungen des Generators sind über Wechselrichter an den DC-Bus der Lane-Gruppe angeschlossen. Die Wechselrichter regeln die DC-Spannung ihrer Lane-Gruppe. Über die Amplitude der DC-Spannung steuert der Wechselrichter die Ladung bzw. Entladung der Batterien in der Lane-Gruppe.

Verfügt eine Lane-Gruppe über überschüssige Energie in den Batterien, kann die Energie über den Generator durch das Zusammenspiel von zwei Wechselrichtern in eine andere Lane-Gruppe übertragen werden. Die Übertragung erfolgt ohne galvanische Kopplung, so dass die Lane-Gruppen elektrisch unabhängig bleiben.

In einem zweiten Aspekt der Erfindung erfolgt der Energietransfer über einen Transformator. Diese Variante ist einsetzbar, wenn kein Generator im Antriebssystem vorhanden ist.

Anstelle des Generators ist ein Transformator eingebaut, der so viele Wicklungen wie Lane-Gruppen hat. Die Wicklungen sind über einen Wechselrichter mit dem DC-Bus der jeweiligen Lane-Gruppe verbunden. Die Wechselrichter bauen gemeinsam an ihrem AC-Ausgang ein magnetisch gekoppeltes AC-Netz auf. Sie regeln also nicht mehr die DC-Spannung im DC-Bus, sondern die AC-Spannung.

Über eine Frequenz- und Spannungsregelung mit integrierten Droop-Funktionen kann der Energieaustausch zwischen den Wechselrichtern im AC-Netz ohne überlagerte Steuerung organisiert werden. Die Frequenz des AC-Netzes variiert in engen Grenzen.

Ist die Frequenz kleiner als die Nennfrequenz, liegt Energiemangel vor und die Wechselrichter mit Energieüberschuss auf ihrer DC-Seite können Energie einspeisen. Dann steigt die Frequenz wieder an bis sie die Nennfrequenz erreicht.

Ist die Frequenz größer als die Nennfrequenz, liegt Energieüberschuss vor und die Wechselrichter mit Energiebedarf auf ihrer DC-Seite können Energie entnehmen. Dann sinkt die Frequenz wieder ab bis sie die Nennfrequenz erreicht.

Die Erfindung beansprucht ein elektrisches Antriebssystem, das aufweist:
- mehrere mehrphasige Multi-Lane Elektromotoren, wobei gleiche Lanes unterschiedlicher Elektromotore gemeinsam eine Lane-Gruppe bilden,
- mindestens einen elektrischen Energiespeicher für jede Lane-Gruppe,
- ein elektrisches AC/DC-Stellgerät für jede Lane-Gruppe,
- einen DC-Bus für jede Lane-Gruppe, wobei über den DC-Bus ein DC/AC-Stellgerät für jede Lane der Elektromotore mit Gleichstrom durch die AC/DC-Stellgeräte versorgbar ist,
- einen elektromagnetischen Wandler, der ausgebildet ist, die Wechselspannungen der AC/DC-Stellgeräte elektromagnetisch zu verketten,
- eine Steuer- und Regeleinheit, die eingerichtet ist, bei Wegfall einer Lane-Gruppe die elektrische Energie des elektrischen Energiespeichers der weggefallenen Lane-Gruppe durch eine Regelegung der Spannung der AC/DC Stellgeräte für mindestens eine nicht weggefallene Lane-Gruppe zur Verfügung zu stellen.

Die Erfindung bietet den Vorteil, dass bei Wegfall einer Lane-Gruppe bei elektrischen Antriebssystemen mit Multilane-Elektromotoren die elektrische Energie der wegfallenden Lane-Gruppe einer anderen Lane-Gruppe, und damit den anderen Lanes der Elektromotore oder dem Laden von Batterien, zur Verfügung gestellt werden.

In einer Weiterbildung des Antriebssystems kann
- der elektromagnetische Wandler ein elektrischer Generator sein, bei dem für jede Lane-Gruppe mindestens eine Wicklung ausgebildet ist, und
- die Steuer- und Regeleinheit eingerichtet sein, bei Wegfall einer Lane-Gruppe die elektrische Energie des elektrischen Energiespeichers der weggefallenen Lane-Gruppe durch eine Regelegung der DC-Spannung der AC/DC Stellgeräte für mindestens eine nicht weggefallene Lane-Gruppe zur Verfügung zu stellen.

In einer weiteren Ausführungsform des Antriebssystems wird der elektrische Generator durch eine Turbine angetrieben.

In einer weiteren Ausführungsform des Antriebssystems kann
- der elektromagnetische Wandler ein Transformator sein, bei dem für jede Lane-Gruppe eine Wicklung ausgebildet ist, und
- die Steuer- und Regeleinheit eingerichtet sein, bei Wegfall einer Lane-Gruppe die elektrische Energie des elektrischen Energiespeichers der weggefallenen Lane-Gruppe durch eine Regelegung der AC-Spannung der AC/DC Stellgeräte für mindestens eine nicht weggefallene Lane-Gruppe zur Verfügung zu stellen.

In einer weiteren Ausführungsform kann der elektrische Energiespeicher eine wiederaufladbare Batterie aufweisen.

In einer weiteren Ausgestaltung kann das AC/DC Stellgerät und/oder das DC/AC Stellgerät ein Wechselrichter sein.

In einer weiteren Ausführungsform kann das AC/DC Stellgerät, das DC/AC Stellgerät und der Energiespeicher jeweils mit einem elektrischen Schaltelement mit dem DC-Bus elektrisch verbunden sind. Dadurch können diese Komponenten vom DC-Bus getrennt werden.

Die Erfindung beansprucht auch ein Fahrzeug mit einem erfindungsgemäßen Antriebssystem, wobei mindestens ein Rad, ein Propeller oder ein Triebwerk von dem Antriebssystem angetrieben werden.

Außerdem beansprucht die Erfindung ein Verfahren zum Betrieb eines elektrischen Antriebssystems, mit den Schritten:
- Bereitstellen mehrerer mehrphasiger Multi-Lane Elektromotore, wobei gleiche Lanes unterschiedlicher Elektromotore gemeinsam eine Lane-Gruppe bilden,
- Bereitstellen mindestens eines elektrischen Energiespeichers für jede Lane-Gruppe,
- Bereitstellen eines elektrischen AC/DC-Stellgeräts für jede Lane-Gruppe,
- Bereitstellen einen DC-Buses für jede Lane-Gruppe, wobei über den DC-Bus ein DC/AC-Stellgerät für jede Lane der Elektromotore mit Gleichstrom durch die AC/DC-Stellgeräte versorgbar ist,
- Bereitstellen eines elektromagnetischen Wandlers, der ausgebildet ist, die Wechselspannungen der AC/DC-Stellgeräte elektromagnetisch zu verketten, und
- bei Wegfall einer Lane-Gruppe die elektrische Energie des elektrischen Energiespeichers der weggefallenen Lane-Gruppe durch eine Regelegung der Spannung der AC/DC Stellgeräte für mindestens eine nicht weggefallene Lane-Gruppe zur Verfügung gestellt wird.

In einer Weiterbildung des Verfahrens kann
- der elektromagnetische Wandler ein elektrischer Generator sein, bei dem für jede Lane-Gruppe mindestens eine Wicklung ausgebildet ist, und
- bei Wegfall einer Lane-Gruppe die elektrische Energie des elektrischen Energiespeichers der weggefallenen Lane-Gruppe durch eine Regelegung der DC-Spannung der AC/DC Stellgeräte für mindestens eine nicht weggefallene Lane-Gruppe zur Verfügung gestellt werden.

In einer Weiterbildung des Verfahrens wird der elektrische Generator durch eine Turbine angetrieben.

In einer weiteren Ausprägung des Verfahrens kann
- der elektromagnetische Wandler ein Transformator sein, bei dem für jede Lane-Gruppe eine Wicklung ausgebildet ist, und
- bei Wegfall einer Lane-Gruppe die elektrische Energie des elektrischen Energiespeichers der weggefallenen Lane-Gruppe durch eine Regelegung der AC-Spannung der AC/DC Stellgeräte für mindestens eine nicht weggefallene Lane-Gruppe zur Verfügung gestellt werden.

In einer weiteren Ausgestaltung kann bei einer Störung einer Lane einer Lane-Gruppe die gestörte Lane-Gruppe von dem DC-Bus trennen.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
FIG. 1 zeigt ein Schaltbild eines dreiphasigen Elektromotors mit drei Lanes gemäß dem Stand der Technik,
FIG. 2 ein Blockschaltbild eines Antriebssystems mit mehreren dreiphasigen Elektromotoren und drei Lane-Gruppen,
FIG. 3 ein Blockschaltbild eines Antriebssystems mit mehreren dreiphasigen Elektromotoren und drei Lane-Gruppen bei Wegfall einer Lane-Gruppe,
FIG. 4 ein Blockschaltbild eines weiteren Antriebssystems mit mehreren dreiphasigen Elektromotoren und drei Lane-Gruppen bei Wegfall einer Lane-Gruppe und
FIG. 5 ein Blockschaltbild eines Fahrzeugs mit einem elektrischen Antriebssystem.

### DETAILLIERTE BESCHREIBUNG DER ERFINDUNG

Das Lane-Konzept kann auf ein gesamtes elektrisches Antriebssystem übertragen werden. Dazu werden die einzelnen Komponenten des Antriebssystems wie Elektromotor, Batterie und Generator ebenfalls mit Lanes ausgeführt. Prinzipiell wäre es möglich, jeweils nur eine Motor-Lane mit einer Batterie-Lane und einer Generator-Lane zu verschalten. In diesem Fall wird die maximal mögliche Separation der Lanes erreicht und damit die maximale Verfügbarkeit des Gesamtsystems erreicht.

Um den Verdrahtungsaufwand gering zu halten, wird man im praktischen Einsatz mehrere Lanes zu Lane-Gruppen kombinieren. Jede Lane-Gruppe hat dann einen eigenen DC-Bus. Im praktischen Betrieb kommt es vor, dass die Lane-Gruppen z.B. aufgrund von Fehlern unterschiedlich belastet werden. Im Extremfall würden bei Ausfall aller Antriebs-Lanes einer Lane-Gruppe die dort angeschlossenen Batterie-Lanes nicht mehr genutzt und die in ihnen gespeicherte elektrische Energie wäre nicht mehr nutzbar. Die Erfindung bietet dafür eine Lösung.

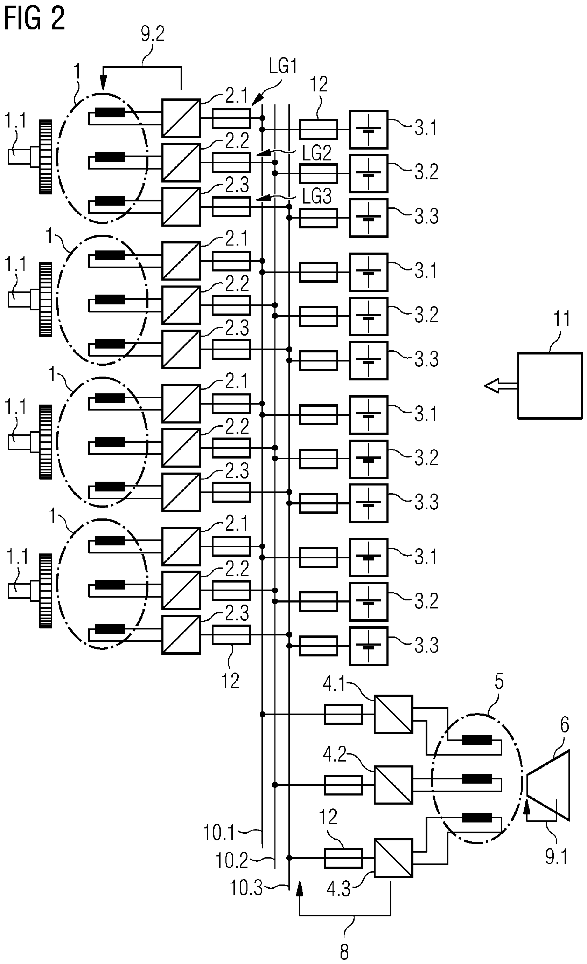

FIG. 2, FIG. 3 und FIG. 4 zeigen Blockschaltbilder von Ausführungsbeispielen, die bei einem Wegfall einer Lane-Gruppe die in dieser zur Verfügung stehende elektrische Energie in einer anderen Lane-Gruppe nutzen können.

Vier mehrphasige Elektromotore 1 treiben jeweils eine Antriebswelle 1.1, die mechanische Energie abgibt, an. Jeder Elektromotor 1 wird von drei Lanes mit elektrischer Energie versorgt. Diese wird durch das erste Stellgerät 2.1 für die erste Lane, durch das zweite Stellgerät 2.2 für die zweite Lane und durch das dritte Stellgerät 2.3 bereitgestellt. Bei den Stellgeräten 2.1, 2.2 und 2.3 handelt es sich um DC/AC Stellgeräte, die Gleichstrom in Wechselstrom wandeln (= Wechselrichter) und die Drehzahl des Elektromotors 1 regeln, was durch das Bezugszeichen "zweite Drehzahlregelung 9.2" angezeigt wird.

Die ersten Stellgeräte 2.1 sind DC-seitig über ein elektrisches Schaltelement 12 mit einem ersten DC-Bus 10.1 verbunden. Die zweiten Stellgeräte 2.2 sind DC-seitig über ein elektrisches Schaltelement 12 mit einem zweiten DC-Bus 10.2 verbunden. Die dritten Stellgeräte 2.3 sind DC-seitig über ein elektrisches Schaltelement 12 mit einem dritten DC-Bus 10.3 verbunden.

Mit dem ersten DC-Bus 10.1 sind für jede erste Lane der Elektromotore 1 ein erster Energiespeicher 3.1 (also zusammen vier) mittels einem Schaltelement 12 elektrisch verbunden. Mit dem zweiten DC-Bus 10.2 sind für jede zweite Lane der Elektromotore 1 ein zweiter Energiespeicher 3.2 (also zusammen vier) mittels einem Schaltelement 12 elektrisch verbunden. Mit dem dritten DC-Bus 10.3 sind für jede dritte Lane der Elektromotore 1 ein dritter Energiespeicher 3.1 (also insgesamt vier) mittels einem Schaltelement 12 elektrisch verbunden.

Die ersten Lanes der Elektromotore 1, die ersten Stellgeräte 2.1, die ersten Energiespeicher 3.1 sowie der erste DC-Bus 10.1 bilden die erste Lane-Gruppe LG1. Die zweiten Lanes der Elektromotore 1, die zweiten Stellgeräte 2.2, die zweiten Energiespeicher 3.2 sowie der zweite DC-Bus 10.2 bilden die zweite Lane-Gruppe LG2. Die dritten Lanes der Elektromotore 1, die dritten Stellgeräte 2.3, die dritten Energiespeicher 3.3 sowie der dritte DC-Bus 10.3 bilden die dritte Lane-Gruppe LG3.

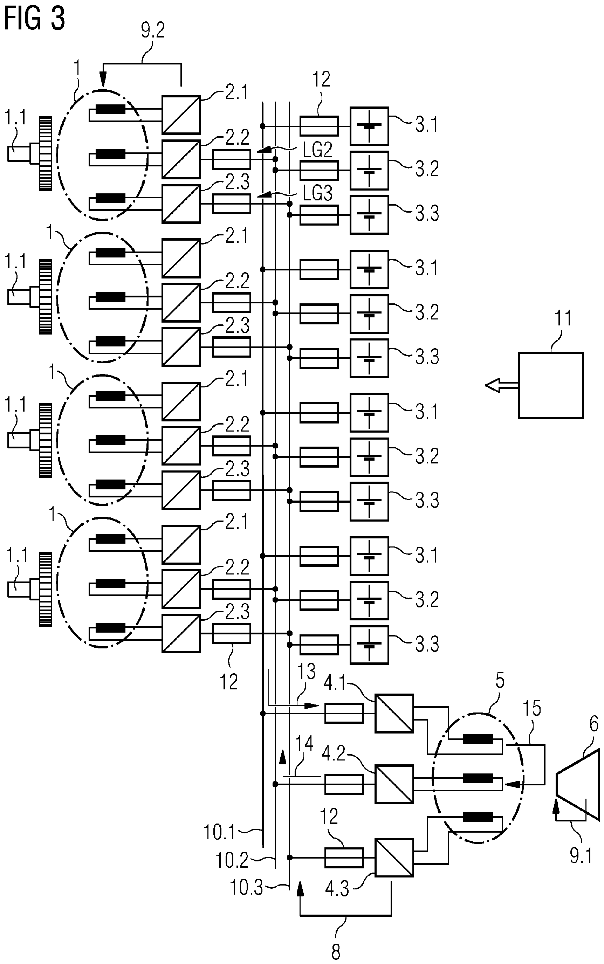

Ein elektromagnetischer Wandler, ein Generator 5 wie in FIG. 2 und FIG. 3 oder ein Transformator 7, jeweils mit mindestens einer Wicklung je Lane-Gruppe LG1, LG2 und LG3, ist über AC/DC Stellegeräte 4.1, 4.2 und 4.2 mit den DC-Bussen 10.1, 10.2 und 10.3 elektrisch verbunden. Die Wicklungen der unterschiedlicher Lane-Gruppen LG1, LG2 und LG3 sind elektromagnetisch gekoppelt. Schaltelemente 12 sind zwischen den DC-Bussen 10.1, 10.2 und 10.3 und den Stellgeräten 4.1, 4.2 und 4.3 angeordnet.

Die Wicklung der ersten Lane-Gruppe LG1 ist über das vierte Stellgerät 4.1 mit dem ersten DC-Bus 10.1 elektrisch verbunden. Die Wicklung der zweiten Lane-Gruppe LG2 ist über das fünfte Stellgerät 4.2 mit dem zweiten DC-Bus 10.2 elektrisch verbunden. Die Wicklung der dritten Lane-Gruppe LG3 ist über das sechste Stellgerät 4.3 mit dem dritten DC-Bus 10.3 elektrische verbunden. Die AC/DC Stellgeräte 4.1, 4.2 und 4.3 können die Spannung auf den DC-Bussen 10.1, 10.2 und 10.3 regeln, was mit dem Bezugszeichen "Spannungsregelung 8" angedeutet ist.

Bei dem Ausführungsbeispiel mit einem Generator 5 gemäß der Blockschaltbilder von FIG. 2 und FIG. 3 wird der Generator 5 von einer Turbine 6 mechanisch angetrieben. Die Turbine 6 hat eine erste Drehzahlregelung 9.1.

Die Steuer- und Regeleinheit 11 steuert die Schaltelemente 12, die Stellgeräte 2.1, 2.2, 2.3, 4.1, 4.2 und 4.3 sowie die Turbine 6. Dazu ist diese mit den Komponenten verbunden, was der Übersichtlichkeit wegen nicht gezeichnet ist.

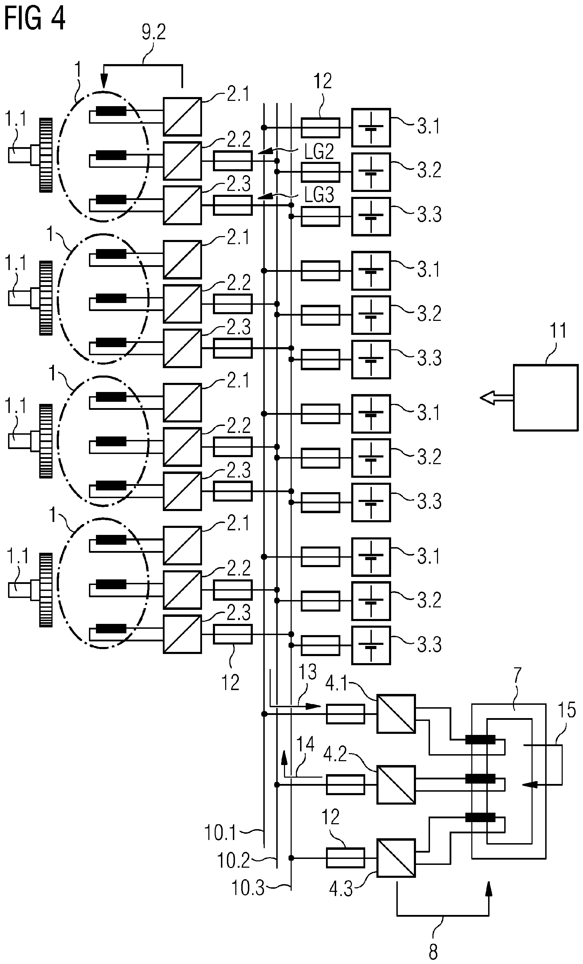

FIG. 2 zeigt einen ungestörten Betriebszustand, wohingegen FIG. 3 und FIG. 4 einen gestörten Betriebszustand zeigen. Im gestörten Betrieb sind alle Lanes der Elektromotore 1 der ersten Lane-Gruppe LG1 weggeschaltet, was durch ein Fehlen der Schaltelemente 12 in den ersten Lanes dargestellt ist. Die erste Lane-Gruppe LG 1 ist elektromagnetisch (elektromagnetische Energieübertragung 15) durch die Wicklungen des Generators 5 (FIG. 3) bzw. des Transformators 7 (FIG. 4) mit der zweiten Lane-Gruppe LG2 gekoppelt.

Durch eine Regelung der DC-Spannung bei der Generatorlösung (FIG. 3) bzw. der AC-Spannung bei der Transformatorlösung (FIG. 4), was durch das Bezugszeichen 8 angedeutet ist, kann die Energie der ersten Lane-Gruppe LG1 ("Entladen 13"), also die in den ersten elektrischen Energiespeichern 3.1 gespeicherte Energie, in die zweite Lane-Gruppe LG2 übertragen werden ("Laden 14"). Diese der zweiten Lane-Gruppe LG2 zusätzlich zur Verfügung stehende elektrische Energie kann über den zweiten DC-Bus 10.2 zum Laden der zweiten Energiespeicher 3.2 oder zur Versorgung der zweiten Lanes der Elektromotore 1 verwendet werden. Durch eine Änderung der Spannungsregelung 8 kann auch elektrische Energie in den dritten DC-Bus 10.3 der dritten Lane-Gruppe LG3 fließen.

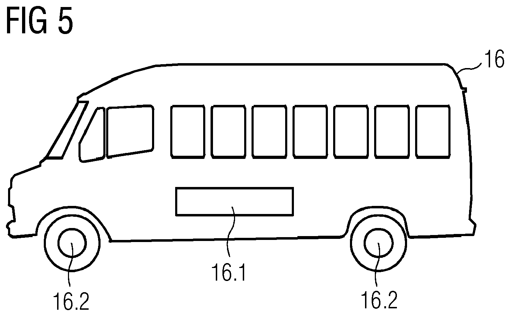

FIG. 5 zeigt ein Blockschaltbild eines Fahrzeugs 16, bei dem die Räder 16.2 durch ein elektrisches Antriebssystem 16.1 nach FIG¨3 oder FIG. 4 angetrieben werden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Elektromotor
- 1.1: Antriebswelle des Elektromotors 1
- 2.1: erstes Stellgerät erste Lane
- 2.2: zweites Stellgerät zweite Lane
- 2.3: drittes Stellgerät dritte Lane
- 3.1: erster elektrischer Energiespeicher erste Lane-Gruppe
- 3.2: zweiter elektrischer Energiespeicher zweite Lane-Gruppe
- 3.3: dritter elektrischer Energiespeicher dritte Lane-Gruppe
- 4.1: viertes Stellgerät erste Lane-Gruppe
- 4.2: fünftes Stellgerät zweite Lane-Gruppe
- 4.3: sechstes Stellgerät dritte Lane-Gruppe
- 5: Elektrischer Generator
- 6: Turbine
- 7: Transformator
- 8: Spannungsregelung
- 9.1: erste Drehzahlregelung
- 9.2: zweite Drehzahlregelung
- 10.1: erster DC-Bus erste Lane-Gruppe
- 10.2: zweiter DC-Bus zweite Lane-Gruppe
- 10.3: dritter DC-Bus dritte Lane-Gruppe
- 11: Steuer- und Regeleinheit
- 12: elektrisches Schaltelement
- 13: Entladen
- 14: Laden
- 15: elektromagnetische Energieübertragung
- 16: Fahrzeug
- 16.1: elektrisches Antriebssystem
- 16.2: Rad
- LG1: erste Lane-Gruppe
- LG2: zweite Lane-Gruppe
- LG3: dritte Lane-Gruppe

## Patentansprüche

1. Elektrisches Antriebssystem, aufweisend:
- mehrere mehrphasige Multi-Lane Elektromotore (1), wobei gleiche Lanes unterschiedlicher Elektromotore (1) gemeinsam eine Lane-Gruppe (LG1, LG2, LG3) bilden,
- mindestens einen elektrischen Energiespeicher (3.1, 3.2, 3.3) für jede Lane-Gruppe (LG1, LG2, LG3),
- ein elektrisches AC/DC-Stellgerät (4.1, 4.2, 4.3) für jede Lane-Gruppe (LG1, LG2, LG3),
- einen DC-Bus (10.1, 10.2, 10.3) für jede Lane-Gruppe (LG1, LG2, LG3), wobei über den DC-Bus (10.1, 10.2, 10.3) ein DC/AC-Stellgerät (2.1, 2.2, 2.3) für jede Lane der Elektromotore (1) mit Gleichstrom durch die AC/DC-Stellgeräte (4.1, 4.2, 4.3) versorgbar ist,
- einen elektromagnetischen Wandler (5, 7), der ausgebildet ist, die Wechselspannungen der AC/DC-Stellgeräte (4.1, 4.2, 4.3) elektromagnetisch zu verketten,
- eine Steuer- und Regeleinheit (11), die eingerichtet ist, bei Wegfall einer Lane-Gruppe (LG1, LG2 oder LG3) die elektrische Energie des elektrischen Energiespeichers (3.1, 3.2 oder 3.3) der weggefallenen Lane-Gruppe (LG1, LG2 oder Lg3) durch eine Regelegung der Spannung der AC/DC Stellgeräte (4.1, 4.2, 4.3) für mindestens eine nicht weggefallene Lane-Gruppe (LG1, LG2 oder LG3) zur Verfügung zu stellen.

2. Antriebssystem nach Anspruch 1,
**dadurch gekennzeichnet,**
- **dass** der elektromagnetische Wandler ein elektrischer Generator (5) ist, bei dem für jede Lane-Gruppe (LG1, LG2, LG3) mindestens eine Wicklung ausgebildet ist, und
- die Steuer- und Regeleinheit (11) eingerichtet ist, bei Wegfall einer Lane-Gruppe (LG1, LG2 oder LG3) die elektrische Energie des elektrischen Energiespeichers (3.1, 3.2 oder 3.3) der weggefallenen Lane-Gruppe (LG1, LG2 oder LG3) durch eine Regelegung der DC-Spannung der AC/DC Stellgeräte (4.1, 4.2, 4.3) für mindestens eine nicht weggefallene Lane-Gruppe (LG1, LG2 oder LG3) zur Verfügung zu stellen.

3. Antriebssystem nach Anspruch 2,
**gekennzeichnet durch**:
- eine den elektrischen Generator (5) antreibende Turbine (6) .

4. Antriebssystem nach Anspruch 1,
**dadurch gekennzeichnet,**
- **dass** der elektromagnetische Wandler ein Transformator (7) ist, bei dem für jede Lane-Gruppe (LG1, LG2, LG3) eine Wicklung ausgebildet ist, und
- die Steuer- und Regeleinheit (11) eingerichtet ist, bei Wegfall einer Lane-Gruppe (LG1, LG2 oder LG3) die elektrische Energie des elektrischen Energiespeichers (3.1, 3.2 oder 3.2) der weggefallenen Lane-Gruppe (LG1, LG2 oder LG3) durch eine Regelegung der AC-Spannung der AC/DC Stellgeräte (4.1, 4.2, 4.3) für mindestens eine nicht weggefallene Lane-Gruppe (LG1, LG2 oder LG3) zur Verfügung zu stellen.

5. Antriebssystem nach einem der vorhergehenden Ansprüche,
**dadurch gekennzeichnet,**
**dass** der elektrische Energiespeicher (3.1, 3.2, 3.3) eine wiederaufladbare Batterie aufweist.

6. Antriebssystem nach einem der vorhergehenden Ansprüche,
**dadurch gekennzeichnet,**
**dass** das AC/DC Stellgerät (4.1, 4.2, 4.3) und/oder das DC/AC Stellgerät (2.1, 2.2, 2.3) ein Wechselrichter ist.

7. Antriebssystem nach einem der vorhergehenden Ansprüche,
**dadurch gekennzeichnet,**
**dass** die AC/DC Stellgeräte (4.1, 4.2, 4.3), die DC/AC Stellgeräte (2.1, 2.2, 2.3) und die Energiespeicher (3.1, 3.2, 3.3) jeweils mit einem elektrischen Schaltelement (12) mit dem DC-Bus (10.1, 10.2, 10.3) elektrisch verbunden sind.

8. Fahrzeug (16) mit einem Antriebssystem (16.1) nach einem der vorhergehenden Ansprüche, **gekennzeichnet durch**:
- mindestens ein Rad (16.2), einen Propeller oder ein Triebwerk, die von dem Antriebssystem (16.1) antreibbar sind.

9. Verfahren zum Betrieb eines elektrischen Antriebssystems (16.1), mit den Schritten:
- Bereitstellen mehrerer mehrphasiger Multi-Lane Elektromotore (1), wobei gleiche Lanes unterschiedlicher Elektromotore (1) gemeinsam eine Lane-Gruppe (LG1, LG2, LG3) bilden,
- Bereitstellen mindestens eines elektrischen Energiespeichers (3.1, 3.2, 3.3) für jede Lane-Gruppe (LG1, LG2, LG3),
- Bereitstellen eines elektrischen AC/DC-Stellgeräts (4.1, 4.2, 4.3) für jede Lane-Gruppe (LG1, LG2, LG3),
- Bereitstellen eines DC-Buses (10.1, 10.2, 10.3) für jede Lane-Gruppe (LG1, LG2, LG3), wobei über den DC-Bus (10.1, 10.2, 10.3) ein DC/AC-Stellgerät (2.1, 2.2, 2.3) für jede Lane der Elektromotore (1) mit Gleichstrom durch die AC/DC-Stellgeräte (4.1, 4.2, 4.3) versorgbar ist,
- Bereitstellen eines elektromagnetischen Wandlers (5, 7), der ausgebildet ist, die Wechselspannungen der AC/DC-Stellgeräte (4.1, 4.2, 4.3) elektromagnetisch zu verketten, und
- bei Wegfall einer Lane-Gruppe (LG1, LG2 oder LGr) die elektrische Energie des elektrischen Energiespeichers (3.1, 3.2 oder 3.3) der weggefallenen Lane-Gruppe (LG1 , LG2 oder LG3) durch eine Regelegung der Spannung der AC/DC Stellgeräte (4.1, 4.2, 4.3) für mindestens eine nicht weggefallene Lane-Gruppe (LG1, LG2 oder LG3) zur Verfügung gestellt wird.

10. Verfahren nach Anspruch 9,
**dadurch gekennzeichnet,**
- **dass** der elektromagnetische Wandler ein elektrischer Generator (5) ist, bei dem für jede Lane-Gruppe (LG1, LG2, LG3) mindestens eine Wicklung ausgebildet ist, und
- bei Wegfall einer Lane-Gruppe (LG1, LG2 oder LG3) die elektrische Energie des elektrischen Energiespeichers (3.1, 3.2 oder 3.3) der weggefallenen Lane-Gruppe (LG1, LG2 oder LG3) durch eine Regelegung der DC-Spannung der AC/DC Stellgeräte (4.1, 4.2, 4.3) für mindestens eine nicht weggefallene Lane-Gruppe (LG1, LG2 oder LG3) zur Verfügung gestellt wird.

11. Verfahren nach Anspruch 10,
**dadurch gekennzeichnet,**
**dass** der elektrische Generator durch eine Turbine (6) angetrieben wird.

12. Verfahren nach Anspruch 10,
**dadurch gekennzeichnet,**
- **dass** der elektromagnetische Wandler ein Transformator (9) ist, bei dem für jede Lane-Gruppe (LG1, LG2, LG3) eine Wicklung ausgebildet ist, und
- bei Wegfall einer Lane-Gruppe (LG1, LG2 oder LG3) die elektrische Energie des elektrischen Energiespeichers (3.1, 3.2 oder 3.3) der weggefallenen Lane-Gruppe (LG1, LG2 oder LG3) durch eine Regelegung der AC-Spannung der AC/DC Stellgeräte (4.1, 4.2, 4.3) für mindestens eine nicht weggefallene Lane-Gruppe (LG1, LG2 oder LG3) zur Verfügung gestellt wird.

13. Verfahren nach einem der Ansprüche 9 bis 12,
**dadurch gekennzeichnet,**
**dass** bei einer Störung einer Lane einer Lane-Gruppe (LG1, LG2 oder LG3) die entsprechende Lane-Gruppe (LG1, LG2 oder LG3) von dem DC-Bus (10.1, 10.2 oder 10.3) getrennt wird.
